# FASCICULE DE BREVET EUROPEEN

(11) **EP 2 692 561 B1**
(45) Date de publication et mention de la délivrance du brevet: **04.03.2015**
(21) Numéro de dépôt: 13178361.5
(22) Date de dépôt: 29.07.2013
(51) Int. Cl.: B60J 5/12, E06B 3/48

(54) **Dispositif de fermeture d'un compartiment d'un véhicule de transport de marchandises**
Vorrichtung zum Verschliessen des Laderaumes eines Transportfahrzeuges
Device for closing a compartment of a freight vehicle

(30) Priorité: 31.07.2012 FR 1257433
(43) Date de publication de la demande: 05.02.2014
(73) Titulaire: Jean Chereau SAS, 50220 Ducey (FR)
(72) Inventeur: Le Guern, Tangui, 35340 Liffré (FR); Ybert, Florentin, 50800 VILLEDIEU LES POELES (FR); Siess, Jean-Eric, 14000 CAEN (FR); Huard, Jérôme, 50300 SAINT MARTIN DES CHAMPS (FR); Bouteloup, Marc, 50300 SAINT LOUP (FR); Pelchat, Stéphane, 505540 Isigny le Buat (FR)
(74) Mandataire: Casalonga, Axel

(56) Documents cités:
- DE-A1- 10 233 745
- FR-A1- 2 876 060
- GB-A- 665 641
- US-A- 2 039 296
- US-A- 5 501 503

## Description

La présente invention concerne le domaine des véhicules de transport de marchandises tels que les porteurs, les camions, les semi-remorques ou les remorques.

Les compartiments de chargement de tels véhicules présentent généralement un plancher, des flancs verticaux longitudinaux et un pavillon supérieur et présentent généralement un accès arrière opposé à une paroi transversale avant.

Pour fermer l'accès arrière, il est courant de prévoir des systèmes de fermeture qui comportent des portes à un ou plusieurs battants à axes verticaux articulés sur les extrémités arrière des flancs longitudinaux. Bien que ces portes, en position ouverte, puissent libérer toute la largeur et la hauteur de l'accès aux compartiments, leurs battants présentent les inconvénients de se mouvoir largement de part et d'autre des flancs longitudinaux du compartiment et de nécessiter une intervention directe manuelle d'un utilisateur, généralement le chauffeur du véhicule, pour leur ouverture et leur fermeture.

Il est également courant de prévoir des systèmes de fermeture comportant des rails qui sont fixés contre les faces intérieures des flancs longitudinaux du compartiment et qui présentent des portions verticales et des portions horizontales supérieures reliées entre elles par des portions de liaison en forme d'arcs de cercles. Ces systèmes de fermeture comportent en outre un rideau de fermeture composé de plusieurs panneaux successifs articulés entre eux selon des axes horizontaux et dont les extrémités sont munies de galets engagés dans lesdits rails, de telle sorte que le rideau est mobile entre une position abaissée verticale de fermeture de l'accès au compartiment et une position relevée horizontale d'ouverture dans laquelle il s'étend au-dessous du pavillon à l'intérieur du compartiment. Le mécanisme d'entraînement par moteur électrique du rideau est placé à l'intérieur du compartiment. Ces systèmes de fermeture à rideaux coulissants présentent l'inconvénient de réduire considérablement la hauteur d'accès et la hauteur disponible à l'intérieur du compartiment, ainsi que la largeur de l'accès au compartiment. En outre, les salissures du rideau sont introduites à l'intérieur du compartiment.

De tels systèmes de fermeture, à rails intérieurs aux compartiments et à rideaux dont les panneaux sont tous verticaux en position de fermeture et glissent sous le pavillon ou toit des compartiments vers une position d'ouverture, sont décrits en particulier dans les brevets GB 665 641, DE 1 189 875, DE 299 09 416, US 2 039 296, FR 2 613 986 et US 5 056 847.

Par ailleurs, le brevet US 5 501 503 décrit un rideau extérieur de fermeture de l'accès arrière d'un compartiment d'un véhicule, présentant des flancs longitudinaux et un pavillon supérieur horizontal, dans lequel les panneaux composant ce rideau, qui se suivent les uns les autres, ne sont pas reliés les uns aux autres et dans lequel les extrémités des panneaux sont munies de bras en saillie qui s'étendent perpendiculairement à ces panneaux à l'extérieur des flancs du compartiment. Ces bras portent à leurs extrémités des galets qui sont engagés dans des rails aménagés dans les faces extérieures des flancs du compartiment.

En position de fermeture, les panneaux du rideau sont tous placés verticalement en arrière de l'ouverture d'accès du compartiment et les galets sont dans des portions verticales des rails. En position d'ouverture, les panneaux du rideau sont placés horizontalement à grande distance au-dessus du pavillon du compartiment et les galets sont dans des portions horizontales des rails.

Pour que les panneaux puissent contourner le bord arrière du pavillon du compartiment et passer de leur position verticale à leur position horizontale, les parties qui joignent les portions verticales et les portions horizontales des rails sont reliées par des portions en forme de têtes d'épingles s'étendant vers l'arrière et permettant de déporter vers l'arrière les panneaux.

Le rideau de fermeture décrit dans le brevet US 5 501 503 présente l'inconvénient d'engendrer une surépaisseur en largeur par rapport aux faces extérieures des flancs du compartiment. Des difficultés quant à la réalisation d'une fermeture étanche et quant à la manoeuvre du rideau de fermeture entre ses positions d'ouverture et de fermeture sont apparentes et ne sont pas résolues.

Le document FR 2 876 060 représente l'état de la technique le plus proche.

La présente invention a pour but d'éviter ou pour le moins de limiter les inconvénients des systèmes de fermeture connus à ce jour.

Il est proposé un dispositif de fermeture d'un compartiment d'un véhicule de transport de marchandises tel qu'un porteur, un camion, une semi-remorque ou une remorque, délimité par un plancher, des flancs longitudinaux et un pavillon reliant les parties supérieures des flancs longitudinaux et présentant un accès.

Selon un mode d'exécution, le dispositif de fermeture d'un compartiment d'un véhicule de transport de marchandises comprend un rideau de fermeture comprenant des panneaux successifs, et des rails de guidage coopérant avec des moyens de guidage portés par les extrémités latérales des panneaux et présentant des portions verticales et des portions horizontales, reliées en elles par des portions de liaison en forme d'arcs, de telle sorte que le rideau de fermeture peut être déplacé le long desdits rails de guidage de façon à occuper une position abaissée de fermeture de l'accès et une position relevée d'ouverture de l'accès.

Les portions verticales des rails de guidage sont placées de façon adjacente aux parties verticales d'extrémité des flancs longitudinaux du compartiment et les portions horizontales des rails de guidage s'étendent au-dessus du pavillon du compartiment, de telle sorte qu'en position relevée le rideau de fermeture s'étende au moins en partie au-dessus du pavillon.

Le pavillon est raccourci de façon à présenter un bord d'extrémité situé du côté du compartiment et à distance des parties d'extrémité verticales desdits flancs longitudinaux. En position de fermeture, le panneau d'extrémité supérieure est incliné vers les autres panneaux et son bord supérieur est situé dans la zone dudit bord d'extrémité du pavillon.

Les portions verticales des rails de guidage peuvent s'étendre le long des champs verticaux d'extrémité des flancs longitudinaux du compartiment.

Des moyens de transfert peuvent être prévus pour déplacer par basculement, jusqu'à la position de fermeture, le panneau d'extrémité supérieure du rideau de fermeture vers le bas par rapport aux portions horizontales des rails de guidage, dans laquelle les bords latéraux d'extrémité de ce panneau sont au-dessus de rebords fixes d'appui, et l'en écarter vers le haut lors du début de son déplacement vers la position d'ouverture.

Le panneau d'extrémité supérieure du rideau de fermeture peut être porté par des chariots coopérant avec lesdits rails de guidage, par l'intermédiaire de bras de basculement articulés d'une part sur les chariots et d'autre part sur le panneau d'extrémité supérieure, ces bras de basculement étant munis de doigts coopérant avec des cames de transfert.

Le dispositif peut comprendre une structure rigide comprenant des montants incluant les portions verticales des rails de guidage, des longerons incluant les portions horizontales des rails de guidage et des plaques d'angle reliant les montants et les longerons et le long desquelles s'étendent les portions de liaison des rails de guidage.

La structure rigide peut comprendre en outre des plaques latérales d'angles munies d'un rebord d'appui du panneau d'extrémité supérieure du rideau de fermeture en position fermée inclinée.

Lesdits montants peuvent être au moins en partie encastrés dans les parties verticales d'extrémité des flancs longitudinaux du compartiment.

Lesdits longerons peuvent être au moins en partie encastrés dans le pavillon du compartiment.

Lesdits montants peuvent être munis de languettes en avant desquels des rebords d'extrémité des panneaux inférieur et intermédiaires du rideau de fermeture en position verticale s'étendent et se déplacent. Le dispositif peut comprendre en outre des moyens d'entraînement du rideau de fermeture, placés dans l'espace supérieur arrière situé au-dessus et en arrière des portions de liaison des rails de guidage.

Les moyens d'entraînement peuvent comprendre un arbre transversal portant des roues d'entraînement, des éléments souples allongés de transmission tels que des chaînes, dont les extrémités sont reliées aux panneaux d'extrémité du rideau de fermeture et en prise avec lesdites roues d'entraînement, un moteur d'entraînement relié audit arbre transversal et un ressort de torsion placé autour dudit arbre d'entraînement dont une extrémité est reliée à cet arbre et l'autre extrémité est fixe.

Les brins verticaux des éléments souples allongés peuvent s'étendre à l'intérieur des montants de la structure rigide.

Le moteur électrique et la liaison entre ce dernier et l'arbre de transmission peuvent être réversibles de telle sorte que le rideau de fermeture peut être déplacé manuellement.

Les panneaux successifs du rideau de fermeture peuvent être articulés entre eux et porter des galets coopérant avec lesdits rails de guidage.

Le dispositif de fermeture peut être pré-assemblé de façon à former une unité fonctionnelle.

Il est également proposé un véhicule de transport de marchandises tel qu'un porteur, un semi-remorque ou une remorque, équipé d'un dispositif de fermeture et comprenant un carénage fixé au-dessus du pavillon et délimitant un espace de réception des parties du dispositif de fermeture situées au-dessus et/ou à l'extrémité du pavillon.

Un dispositif de fermeture selon la présente invention, d'un compartiment d'un véhicule de transport de marchandises, va maintenant être décrit à titre d'exemple non limitatif, illustré par le dessin annexé sur lequel :
- la figure 1 représente une vue en perspective plongeante arrière d'un véhicule entier muni d'un carénage supérieur, comprenant un rideau de fermeture en position fermée ;
- la figure 2 représente une vue en perspective plongeante d'une partie arrière du véhicule, sans le carénage supérieur et le rideau de fermeture en position intermédiaire ;
- la figure 3 représente une vue en perspective plongeante d'une partie arrière du véhicule, sans le carénage supérieur et le rideau de fermeture en position d'ouverture ;
- la figure 4 représente une vue en perspective éclatée du dispositif de fermeture ;
- la figure 5 représente une vue en perspective de la structure rigide du dispositif de fermeture munie d'un rideau de fermeture en position intermédiaire ;
- la figure 6 représente une vue latérale de l'intérieur vers l'extérieur d'un côté gauche de la structure rigide ;
- la figure 7 représente une vue en perspective partielle de l'intérieur d'un coin gauche de la structure rigide ;
- la figure 8 représente une coupe horizontale d'un côté vertical gauche arrière du compartiment et du dispositif de fermeture ;
- la figure 9 représente une coupe verticale transversale d'un côté supérieur gauche du compartiment et du dispositif de fermeture ;
- la figure 10 représente une coupe verticale longitudinale de la partie arrière gauche du compartiment et du dispositif de fermeture, le rideau de fermeture étant en position fermée ;
- la figure 11 représente une coupe verticale longitudinale de la partie supérieure arrière gauche du compartiment et de la partie correspondante du dispositif de fermeture, le rideau de fermeture étant en position fermée ;
- la figure 12 représente une coupe verticale longitudinale de la partie supérieure arrière gauche du compartiment et de la partie correspondante du dispositif de fermeture, le rideau de fermeture étant en position de début d'ouverture ;
- la figure 13 représente une coupe verticale longitudinale de la partie supérieure arrière gauche du compartiment et de la partie correspondante du dispositif de fermeture, le rideau de fermeture étant en position de poursuite de l'ouverture ; et
- la figure 14 représente une vue en perspective du rideau et d'un mécanisme d'entraînement de ce rideau.

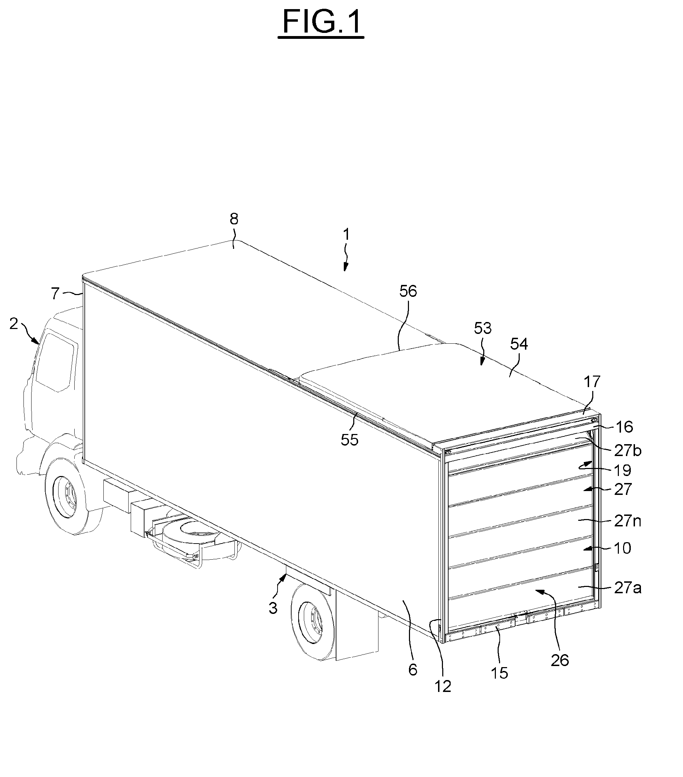

Sur les figures 1 à 3, est illustré un véhicule 1 de transport de marchandises, en particulier un porteur ou camion, qui comprend, en arrière d'une cabine avant de pilotage 2 et sur un châssis 3, un compartiment parallélépipédique 4 délimité par un plancher horizontal 5, des flancs latéraux verticaux longitudinaux 6, une paroi transversale avant verticale 7 et un pavillon horizontal 8 qui relie les bords supérieurs des flancs longitudinaux 6 et de la paroi transversale 7 et qui forme le toit du compartiment 4, de telle sorte que le compartiment 4 présente une ouverture d'accès arrière 9.

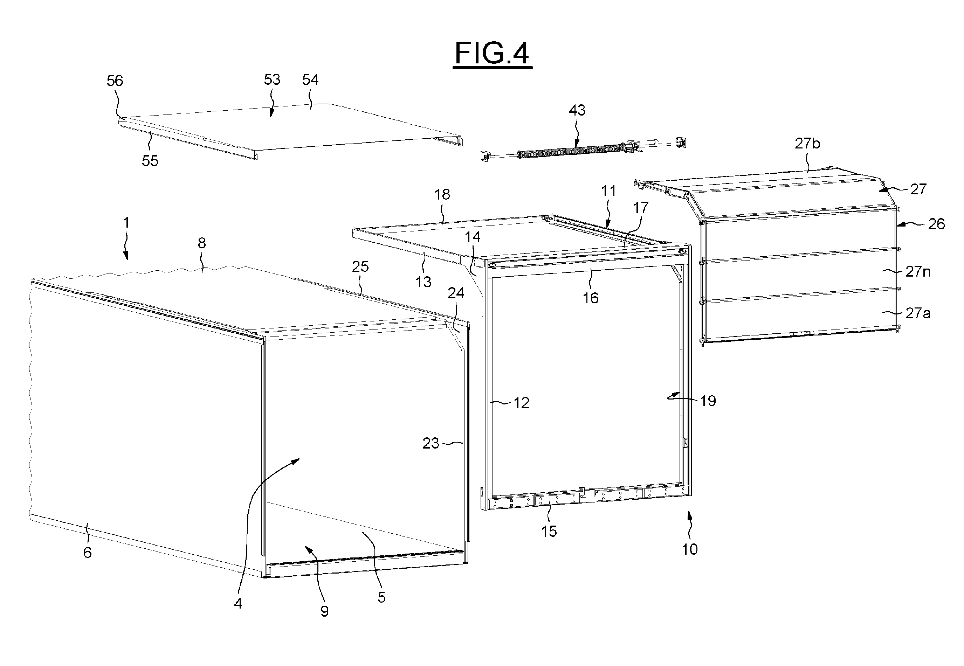

Comme illustré sur la figure 4, le pavillon horizontal 8 est raccourci à l'arrière de façon à présenter un bord d'extrémité arrière transversal 8a situé du côté du compartiment et situé à distance des extrémités arrière verticales des flancs longitudinaux 6 et en avant par rapport à ces dernières.

Comme également illustré sur la figure 4, le compartiment 4 est équipé sur sa partie arrière d'un dispositif de fermeture 10 permettant de fermer/ouvrir l'ouverture d'accès arrière 9 et constituant une unité fonctionnelle pouvant être construite séparément puis installée sur le compartiment 4.

Ce dispositif de fermeture 10 comprend une structure rigide 11 qui est symétrique par rapport au plan vertical longitudinal de symétrie du compartiment 4, un rideau de fermeture 26 qui est également symétrique par rapport au plan vertical longitudinal de symétrie du compartiment 4 et qui peut être monté sur la structure rigide 11, un mécanisme d'entraînement 43 qui peut être monté sur la partie arrière supérieure de la structure rigide 11 et un carénage supérieur de protection 53 pouvant être monté sur le compartiment 4.

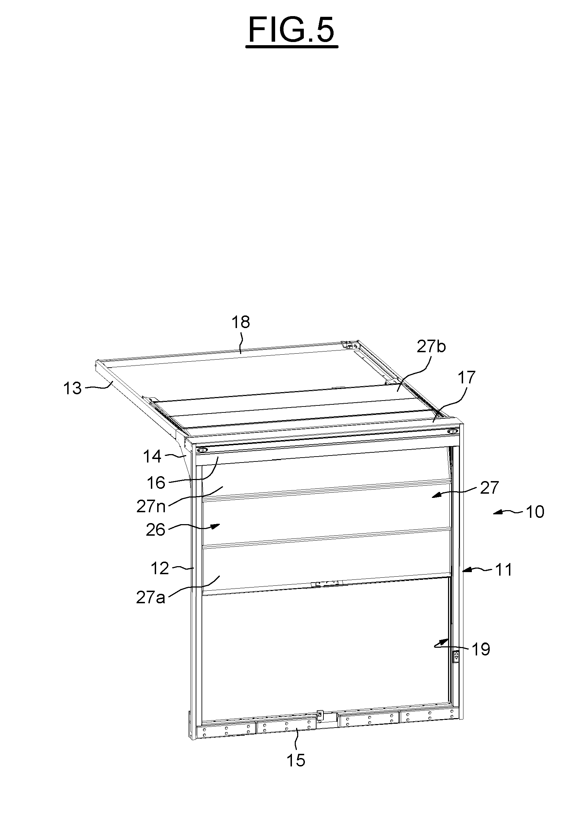

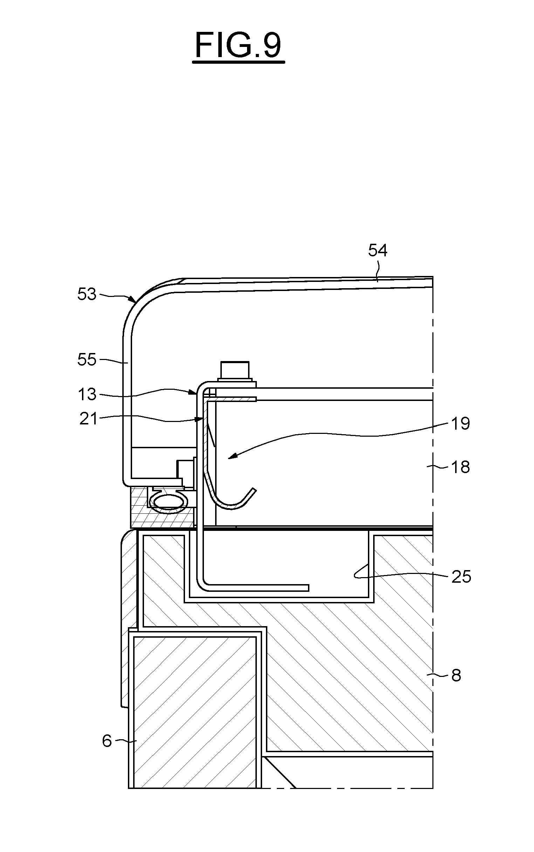

Comme illustré en particulier sur les figures 4, 5, 8, 9 et 10, la structure rigide 11 comprend des montants verticaux 12 faits de profilés et placés de façon adjacente aux parties d'extrémités verticales des flancs longitudinaux 6, ainsi que des longerons longitudinaux 13 faits de profilés et s'étendant au-dessus du pavillon 8 du compartiment 4.

Les montants et les longerons 13 s'étendent en formant des L inversés s'étendant dans des plans verticaux longitudinaux.

La structure rigide 11 comprend en outre des plaques latérales d'angle 14 de forme triangulaire fixées aux montants verticaux 12 et aux longerons 13.

La structure rigide 11 comprend également une traverse inférieure 15 reliant les extrémités inférieures des montants verticaux 12, une traverse supérieure 16 reliant les extrémités supérieures des montants verticaux 12, une traverse arrière 17 reliant les extrémités arrière des longerons 13 et une traverse avant 18 reliant les extrémités avant des longerons 13.

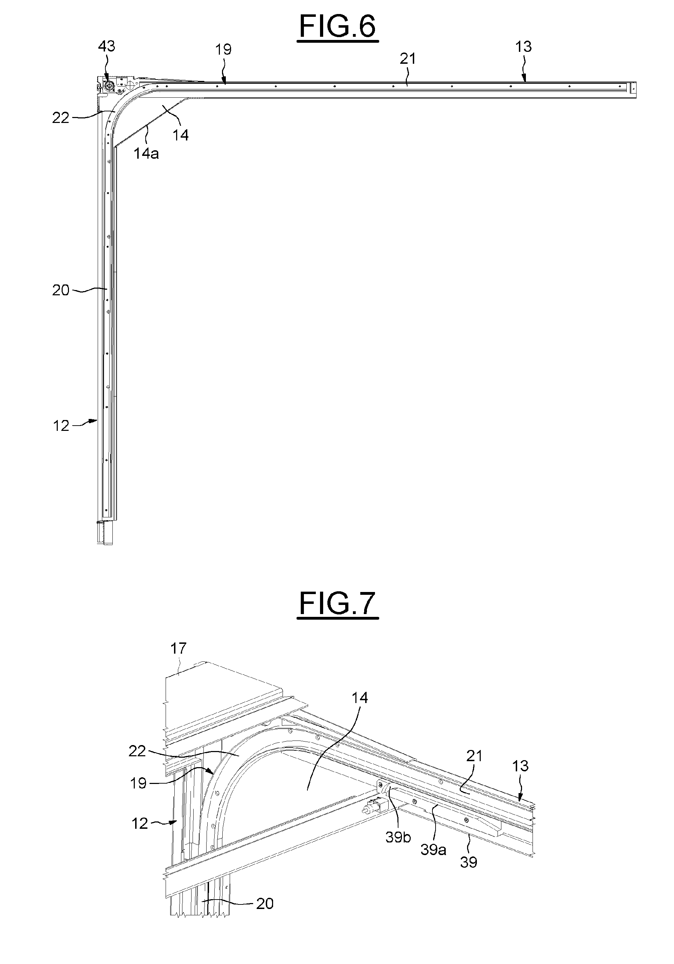

La structure rigide 11 du dispositif de fermeture 10 comprend des rails continus de guidage 19 qui, comme illustré en particulier sur la figure 6, présentent des portions verticales 20 et des portions horizontales 21, reliées en elles par des portions de liaison 22 en forme d'arcs de cercles, qui rejoignent tangentiellement les portions verticales 20 et les portions horizontales 21.

Les portions verticales 20 sont formées par des profilés en forme de U intégrés aux montants verticaux 12 et ouverts l'un vers l'autre transversalement au compartiment 4, qui s'étendent sur une partie de la hauteur de ces montants, depuis leurs extrémités inférieures et jusqu'à distance de leurs extrémités supérieures.

Les portions horizontales 21 sont formées par des profilés en forme de U intégrés aux longerons 13 et ouverts l'un vers l'autre transversalement au compartiment 4, qui s'étendent sur une partie de la longueur de ces longerons, depuis leurs extrémités avant et jusqu'à distance de leurs extrémités arrière.

Les portions de liaison 22 sont formées par des profilés en forme de U accolés aux faces intérieures des plaques d'angle 14 et ouverts l'un vers l'autre transversalement au compartiment 4.

Pour recevoir la structure rigide 11 du dispositif de fermeture 10, selon un exemple de réalisation illustré en particulier sur les figures 4, 8, 9 et 10, les champs verticaux d'extrémité arrière des flancs longitudinaux du compartiment présentent des évidements qui sont en forme de feuillures 23 et qui sont aménagés le long de leur coin arrière intérieur. Les coins supérieurs arrière en vis-à-vis des flancs longitudinaux 6 du compartiment 4 présentent des entailles intérieures 24 qui sont de forme triangulaire et qui prolongent les évidements en forme de feuillures 23. La face supérieure du pavillon 8 présente des rainures longitudinales 25.

La structure rigide 11 du dispositif de fermeture 10 est alors installée sur la partie arrière du compartiment 4 dans la position suivante.

Les montants verticaux 12 sont en partie encastrés dans les évidements en forme de feuillures 23. Les longerons sont en partie encastrés dans les rainures longitudinales 25. Les parties supérieures des montants verticaux, les parties arrière des longerons et les plaques d'angles 14 sont en partie encastrées dans les entailles intérieures 24. La forme triangulaire des entailles intérieures 24 correspond à la forme triangulaire des plaques d'angles 14. La traverse inférieure 15 est située juste en arrière du plancher 5 du compartiment et la traverse avant 18 est en appui sur la face supérieure du pavillon 8.

Le rideau de fermeture 26 du dispositif de fermeture 10 est accouplé aux rails de guidage 19 en vue de fermer/ouvrir l'ouverture d'accès arrière 9 du compartiment 4.

Comme illustré plus particulièrement sur les figures 4, 5 et 14, le rideau de fermeture 26 comprend une pluralité de panneaux transversaux successifs 27 de forme rectangulaire, dont un panneau d'extrémité inférieure ou de pied 27a, un panneau d'extrémité supérieure ou de tête 27b et des panneaux intermédiaires 27n. L'exemple représenté illustre un rideau de fermeture 26 comprenant en totalité six panneaux transversaux successifs 27. Dans le sens de leur mouvement que l'on décrira plus loin, le panneau de pied 27a et les panneaux intermédiaires 27n présentent la même largeur et le panneau de tête 27b est plus large.

D'une manière générale, les extrémités transversales des panneaux transversaux successifs 27 formant le rideau de fermeture 26 sont équipées ou reliées à des galets qui coopèrent avec les rails de guidage 19, de telle sorte que le rideau de fermeture 26 est mobile entre une position abaissée de fermeture dans laquelle il obstrue l'ouverture d'accès 9 et une position relevée d'ouverture de cette ouverture d'accès 9 dans laquelle il s'étend au-dessus du pavillon 8 du compartiment 4, en libérant toute la hauteur du compartiment 4.

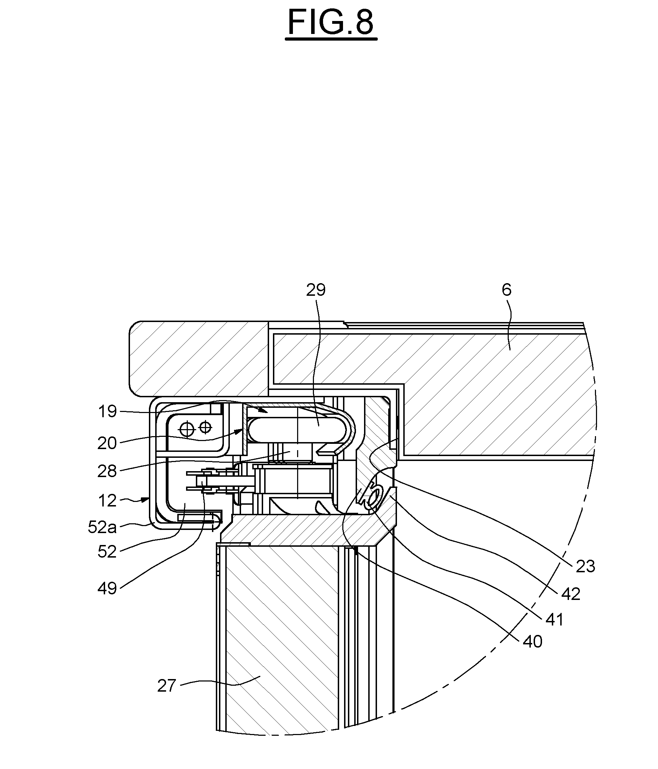

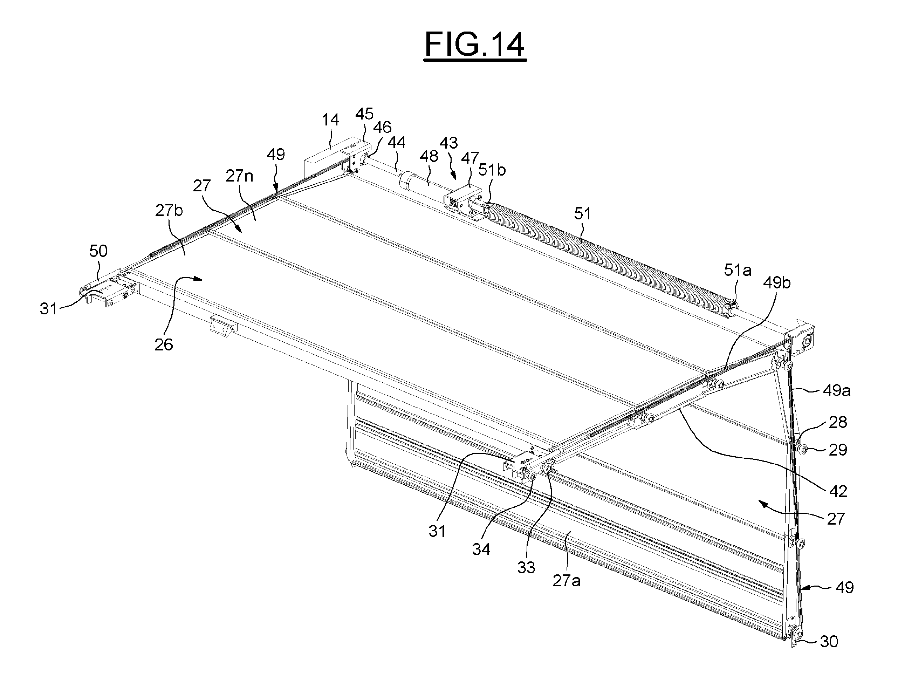

Les panneaux transversaux 27 sont reliés entre eux par des axes transversaux 28 situés dans les zones des extrémités de leurs bords transversaux adjacents. Ces axes transversaux 28 sont prolongés transversalement et portent des galets 29 qui sont engagés dans les rails de guidage 19, entre les branches opposées de leurs sections en forme de U (figures 8 et 14).

De façon équivalente, le panneau de pied 27a porte, dans les zones des extrémités de son bord transversal inférieur d'extrémité, des axes transversaux prolongés transversalement et portant des galets 30 qui sont engagés également dans les rails de guidage 19.

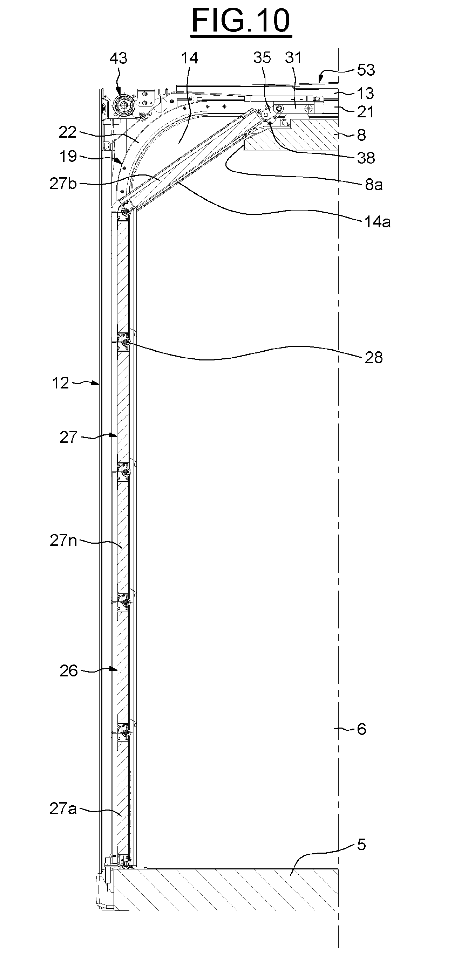

Comme illustré en particulier sur les figures 10 et 14, le panneau de tête 27b est relié, dans les zones des extrémités de son bord transversal supérieur ou avant, à des chariots latéraux 31 par l'intermédiaire de bras de basculement 35 articulés transversalement et grâce à des axes transversaux 36 et 37. Les chariots latéraux 31, qui sont adjacents aux côtés intérieurs des rails de guidage 19 et qui sont placés en avant du panneau de tête 27b, portent des paires de galets 33 et 34 qui sont engagés dans ces rails de guidage 19.

Les bras de basculement 35 sont munis de doigts transversaux 38 aptes à coopérer avec des cames locales 39 (voir figure 7) qui sont solidaires des longerons 13 et qui présentent des surfaces longitudinales avant 39a et des rainures arrière 39b arquées vers le bas et prolongeant les surfaces longitudinales 39a.

Selon un exemple particulier de réalisation illustré sur les figures, le rideau de fermeture 26 est mobile de la manière suivante.

Dans la position finale de fermeture illustrée sur les figures 1, 10 et 11, le panneau de pied 27a et des panneaux intermédiaires 27n sont disposés verticalement, en jonction étanche les uns avec les autres, le panneau de pied 27a étant contre la traverse inférieure 15, par l'intermédiaire d'un joint d'étanchéité. Le panneau de pied 27a et les panneaux intermédiaires 27n s'étendent transversalement entre les portions verticales 20 des rails de guidage 19. On note que le bord transversal d'extrémité arrière 8a du pavillon horizontal 8 est situé à distance et en avant du plan vertical formé par le panneau de pied 27a et des panneaux intermédiaires 27n en position verticale.

Les galets 29 d'articulation entre le panneau de tête 27b et le panneau intermédiaire 27n adjacent sont situés dans les parties supérieures des portions verticales 20 des rails de guidage 19. Le panneau de tête 27b est incliné du côté des autres panneaux, vers le bas d'avant en arrière. Les chariots 31 sont situés dans les parties arrière des portions longitudinales 21 des rails de guidage 19. Le bord supérieur transversal avant du panneau de tête 27b est situé dans la zone du bord d'extrémité arrière 8a du pavillon 8 et au-dessus, avec interposition d'un joint d'étanchéité. Les extrémités latérales du panneau de tête 27b sont situées juste au-dessus de rebords intérieurs en saillie 14a des plaques d'angles 14 aménagées sur les côtés inclinés de ces dernières, avec interposition d'un joint d'étanchéité.

Dans la position de fermeture, le panneau de tête 27b s'étend au-dessous des portions arquées 22 des rails de guidage 19. Les galets intermédiaires 29 et les galets inférieurs 30 sont situés dans les portions verticales 20 des rails de guidage 19 et les paires de galets 33 et 34 des chariots 31 sont situées dans les parties arrière des portions longitudinales 31 des rails de guidage 19. Les doigts transversaux 38 des bras de basculement 35 sont situés dans les extrémités inférieures des rainures arrière 39b des cames 39, la partie avant du panneau de tête 27b étant dans une position basse.

Lorsque le rideau de fermeture 26 est déplacé vers le haut dans le sens de son ouverture depuis sa position finale de fermeture, les galets équipant le rideau de fermeture 26 et les chariots 31 suivent les parcours imposés par les rails de guidage 19.

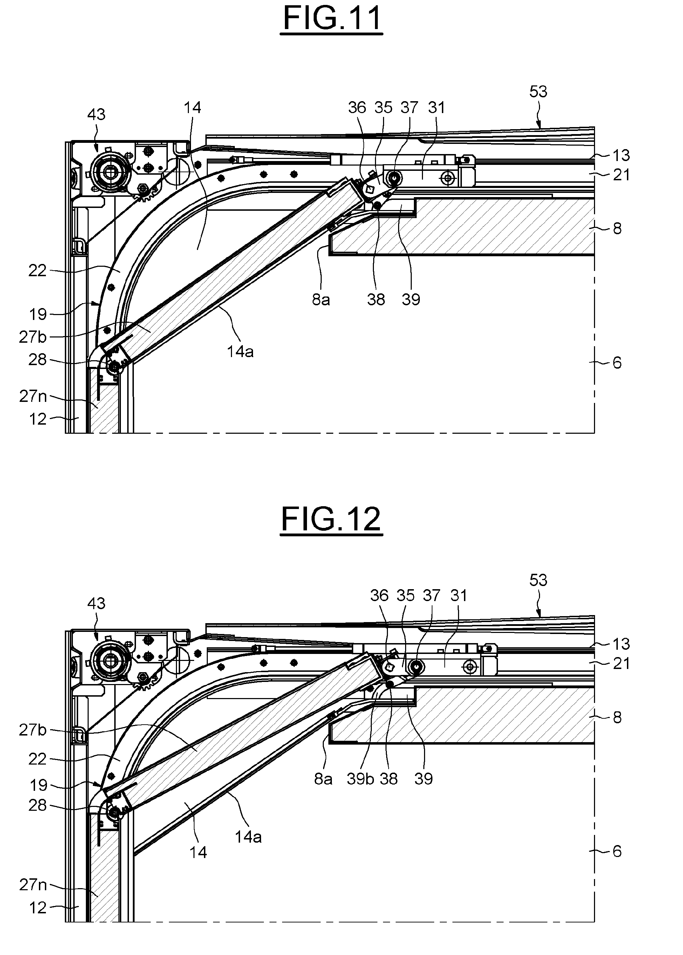

Dans un premier temps, comme illustré sur la figure 12, le panneau de tête 27b se soulève et s'éloigne vers le haut des rebords intérieurs 14a des plaques d'angles 14, sous l'effet du déplacement vers le haut des autres panneaux 27 et sous l'effet du basculement vers le haut des bras de basculement 35 induit par le déplacement vers le haut des doigts transversaux 38 le long des rainures arrière 39b arquées des cames locales 39.

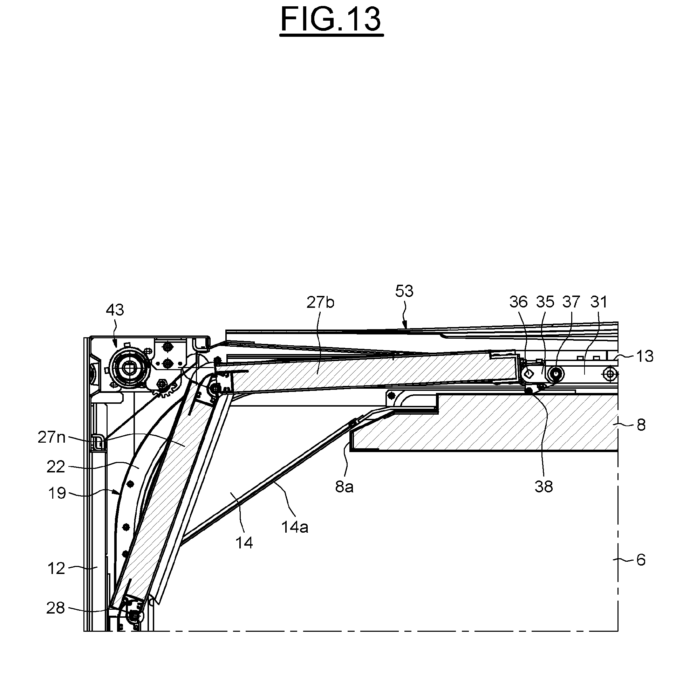

Après quoi, le rideau de fermeture 26 continuant son déplacement en glissant au-dessus et à faible distance du pavillon 8, comme illustré sur la figure 13, le panneau de tête 27b prend une position horizontale et les autres panneaux suivent en prenant successivement une position horizontale. Les bras de basculement 35 sont reliés aux chariots 31 par des ressorts de torsion qui se détendent lors du mouvement des doigts transversaux 38 le long des rainures arrière 39b et qui maintiennent en position haute la partie avant du panneau de tête 27b en position horizontale. Selon une variante de réalisation, le panneau de tête 27b et les chariots 31 pourraient présenter des butées réciproques permettant son maintien en position horizontale

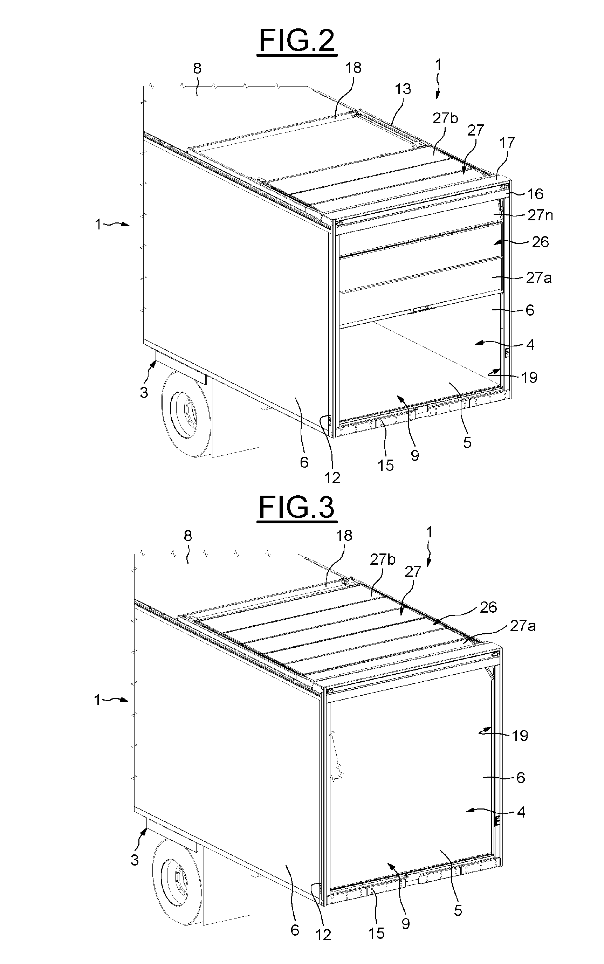

En fin de sa course d'ouverture illustrée en particulier sur la figure 3, le rideau de fermeture 26 atteint une position finale d'ouverture de l'ouverture d'accès 9 dans laquelle le rideau de fermeture 26 s'étend horizontalement au-dessus du pavillon 8, le panneau de tête 27b atteignant la traverse avant 19, tous les galets étant alors disposées dans les portions horizontales 21 des rails de guidage. Selon une variante de réalisation, le panneau de pied 27a pourrait atteindre une position finale d'ouverture dans laquelle il serait incliné vers le bas d'avant en arrière, les galets 30 seraient dans les parties arquées des rails de guidage 19.

Le panneau de pied 27a et les panneaux intermédiaires 27n présentent des longueurs transversales plus courtes que le panneau de tête 27b de façon à passer entre les rebords d'appui 14a et, compte tenu de la disposition décrite en exemple, entre les flancs 6 du compartiment, lors de leurs déplacements dans la zone des coins supérieurs arrière du compartiment 4.

Lorsque le rideau de fermeture 26 est déplacé de sa position finale d'ouverture vers sa position finale de fermeture, les panneaux 27 se déplacent de façon inverse à ce qui vient d'être décrit. En fin de course de fermeture, le panneau de tête 27b descend pour venir au-dessus du rebord 14a sous l'effet du déplacement vers le bas des autres panneaux et du basculement vers le bas du bras de basculement 35.

Comme illustré en particulier sur les figures 8 et 14, les montants 12 de la structure rigide 11 comprennent des languettes verticales 40 situées en avant des portions verticales 20 des rails de guidage 19, en saillie vers l'intérieur et munies, sur leurs faces arrière, de joints d'étanchéité 41. Les extrémités latérales du panneau de pied 27a et des panneaux intermédiaires 27n présentent des rebords en saillie 42 venant en avant des languettes verticales 40.

Les portions verticales 20 des rails de guidage 19 inclinées de quelques degrés et les positions des galets 29 et 30 sont décalées dans le sens de l'épaisseur des panneaux, de telle sorte qu'en position finale de fermeture, les rebords en saillies 42 soient en appui sur les joints d'étanchéité 41.

Comme illustré en particulier sur la figure 14, le mécanisme d'entraînement 43 du rideau de fermeture 26 du dispositif de fermeture 10 est placé dans l'espace supérieur arrière situé au-dessus et en arrière des portions de liaison 22 des rails de guidage 19, c'est-à-dire au-dessus et en arrière du chemin du rideau de fermeture 26 lorsque ce dernier suit ces portions de liaison 22.

Ce mécanisme d'entraînement 43 comprend un arbre transversal d'entraînement 44 dont les extrémités sont portées par des supports latéraux 45 fixés, intérieurement, aux plaques d'angle et/ou en avant de la traverse supérieure 16 et/ou au-dessous de la traverse arrière 17 et dont les extrémités sont munies de roues à dents 46. Selon une variante de réalisation, la traverse supérieure 16 et la traverse arrière 17 pourraient être formées par les branches d'une cornière formant la partie transversale arrière supérieure du compartiment 4.

Le mécanisme d'entraînement 43 comprend un boîtier médian 47 traversé par l'arbre transversal d'entraînement 44 et fixé en avant de la traverse supérieure 16 et/ou au-dessous de la traverse arrière 17. Ce boîtier 47 porte, latéralement et allongé à côté de l'arbre d'entraînement 44, un moteur électrique d'entraînement 48 relié à l'arbre d'entraînement 44 par une transmission mécanique à pignons incluse dans le boîtier 47.

Le mécanisme d'entraînement 43 comprend des chaînes à maillons 49 qui sont en prise avec les roues à dents 46 et qui présentent des brins 49a substantiellement verticaux dont les extrémités inférieures sont reliées aux parties inférieures des extrémités latérales du panneau de pied 27a et des brins 49b substantiellement longitudinaux dont les extrémités avant sont reliées aux chariots 31 portant la partie avant du panneau de tête 27b.

Pour compenser les variations de longueurs lors de la manoeuvre du rideau de fermeture 26, les brins longitudinaux 49b sont reliés aux chariots 31 par l'intermédiaire de ressorts de traction 50.

Le mécanisme d'entraînement 43 comprend en outre un ressort hélicoïdal 51 qui est disposé autour de l'arbre d'entraînement 44, dont une extrémité 51a est fixée à l'arbre d'entraînement 44 et dont l'autre extrémité 51b est fixée au boîtier 47 ou à une autre partie de la structure rigide 11. Ce ressort hélicoïdal 51 se tend lorsque le rideau de fermeture 26 est entraîné vers sa position de fermeture. Cette tension permet de compenser au moins partiellement le poids de la partie verticale du rideau de fermeture 26 et de réduire la puissance nécessaire du moteur d'entraînement 48.

Les chaînes à maillons 49 sont placées pour ne pas gêner les déplacements du rideau de fermeture 26. A cette fin, les brins verticaux 49a s'étendent en arrière du chemin de déplacement vertical du rideau de fermeture 26 et les brins longitudinaux 49b s'étendent au-dessus du chemin horizontal du rideau de fermeture 26.

Comme illustré en particulier sur la figure 8, les montants 12 présentent des canaux verticaux 52 situés en arrière et vers l'intérieur par rapport aux portions verticales 20 des rails de guidage 19, dans lesquels les brins verticaux 49a des chaînes à maillons 49 s'étendent. Les canaux verticaux 52 sont délimités par des branches 52a des montants 12, présentant des bords intérieurs situés à proximité des bords d'extrémités des panneaux 27 en position verticale.

Comme illustré en particulier sur les figures 1, 4 et 10, le véhicule 1 est équipé en outre d'un carénage supérieur 53 placé au-dessus du pavillon 8 et recouvrant à distance la partie du dispositif de fermeture 10 située au-dessus du pavillon 8 et le mécanisme d'entraînement 43. Ce carénage supérieur 53 est en forme de cuvette aérodynamique à l'envers et présente une plaque horizontale 54, des rebords longitudinaux s'étendant vers le bas et dont les bords inférieurs sont en appui sur le pavillon 8, avec interposition d'un joint d'étanchéité, et un rebord avant transversal 56 s'étendant vers le bas et dont le bord inférieur est en appui sur le pavillon 8, avec interposition d'un joint d'étanchéité.

D'un point de vue fonctionnement, le moteur électrique d'entraînement 48 du mécanisme d'entraînement 43 peut être piloté par un circuit électronique soumis à des contacts électriques (non représentés) de fin de course du rideau de fermeture 26 et à un détecteur de position détectant la rotation du moteur électrique d'entraînement 48 ou de la transmission mécanique associée, avec un ralentissement lorsque le rideau de fermeture 26 s'approche de ses fins de course et une accélération lorsque le rideau de fermeture 26 quitte ses fins de course.

En outre, le dispositif de fermeture 10 peut être équipé d'un verrou central ou des verrous latéraux (non représentés) pour le maintien et le verrouillage du rideau de fermeture 26 en position de fermeture. Il est alors avantageux que le moteur électrique et la liaison entre ce dernier et l'arbre de transmission soient réversibles de telle sorte que le rideau de fermeture 26 puisse être déplacé manuellement en particulier en cas de panne électrique.

Selon une variante de réalisation, le dispositif de fermeture 10 pourrait être installé de telle sorte que les montants 12 soient placés contre les parties arrière verticales des faces intérieures des flancs longitudinaux 6 du compartiment 4.

Selon une variante de réalisation, les chaînes d'entraînement 49 pourraient être remplacées par des courroies crantées ou des câbles.

Selon une variante de réalisation, les galets de montage de panneaux du rideau de fermeture 26 pourraient être remplacés par des tampons de guidage, éventuellement articulés.

Selon une variante de réalisation, la partie avant du panneau de tête 27b pourrait être directement portée par les rails de guidage 19 par l'intermédiaire de galets, les chariots 31 étant supprimés.

Selon une variante de réalisation, le moteur électrique 48 et la transmission associée pourraient être supprimés. Le rideau de fermeture 26 serait alors déplaçable manuellement.

Le dispositif de fermeture 10 qui vient d'être décrit peut être appliqué à tous véhicules comportant un compartiment de transport de marchandises. Dans le cas d'une remorque, le dispositif de fermeture 10 pourrait aussi équiper une ouverture d'accès avant de cette remorque, les dispositions étant inversées.

La présente invention ne se limite pas aux exemples ci-dessus décrits. Bien d'autres variantes de réalisation sont possibles, sans sortir du cadre de l'invention, comme défini par les revendications annexées.

## Revendications

1. Dispositif de fermeture d'un compartiment d'un véhicule de transport de marchandises tel qu'un porteur, un camion, une semi- remorque ou une remorque, délimité par un plancher, des flancs longitudinaux et un pavillon reliant les parties supérieures des flancs longitudinaux et présentant un accès, ce dispositif de fermeture comprenant :
un rideau de fermeture (26) comprenant des panneaux successifs (27),
et des rails de guidage (19) coopérant avec des moyens de guidage (29) portés par les extrémités latérales des panneaux et présentant des portions verticales (20) et des portions horizontales (21), reliées en elles par des portions de liaison (22) en forme d'arcs, de telle sorte que le rideau de fermeture peut être déplacé le long desdits rails de guidage de façon à occuper une position abaissée de fermeture de l'accès et une position relevée d'ouverture de l'accès,
les portions verticales (20) des rails de guidage (19) étant placées de façon adjacente aux parties verticales d'extrémité des flancs longitudinaux (6) du compartiment (4) et les portions horizontales (21) des rails de guidage s'étendant au-dessus du pavillon (8) du compartiment (4), de telle sorte qu'en position relevée le rideau de fermeture s'étende au moins en partie au-dessus du pavillon ;
**caractérisé en ce que** le pavillon (8) est raccourci de façon à présenter un bord d'extrémité (8a) situé du côté du compartiment (4) et à distance des parties d'extrémité verticales desdits flancs longitudinaux et dans lequel, en position de fermeture, le panneau d'extrémité supérieure (27b) est incliné vers les autres panneaux et son bord supérieur est situé dans la zone dudit bord d'extrémité (8a) du pavillon (8).

2. Dispositif selon la revendication 1, dans lequel les portions verticales des rails de guidage s'étendent le long des champs verticaux d'extrémité (23) des flancs longitudinaux (6) du compartiment.

3. Dispositif selon l'une quelconque des revendications précédentes, comprenant des moyens de transfert (31, 35) pour déplacer par basculement, jusqu'à la position de fermeture, le panneau d'extrémité supérieure (27b) du rideau de fermeture vers le bas par rapport aux portions horizontales des rails de guidage, dans laquelle les bords latéraux d'extrémité de ce panneau sont au-dessus de rebords fixes d'appui (14a), et l'en écarter vers le haut lors du début de son déplacement vers la position d'ouverture.

4. Dispositif selon la revendication 3, dans lequel le panneau d'extrémité supérieure (27b) du rideau de fermeture est porté par des chariots (31) coopérant avec lesdits rails de guidage (19), par l'intermédiaire de bras de basculement (35) articulés d'une part sur les chariots et d'autre part sur le panneau d'extrémité supérieure, ces bras de basculement (35) étant munis de doigts (38) coopérant avec des cames de transfert (39).

5. Dispositif selon l'une quelconque des revendications précédentes, comprenant une structure rigide (11) comprenant des montants (12) incluant les portions verticales des rails de guidage, des longerons (13) incluant les portions horizontales des rails de guidage et des plaques d'angle reliant les montants et les longerons et le long desquelles s'étendent les portions de liaison des rails de guidage.

6. Dispositif selon la revendication 5, dans lequel la structure rigide comprend des plaques latérales d'angles (14) munies d'un rebord d'appui (14a) du panneau d'extrémité supérieure (27a) du rideau de fermeture en position fermée inclinée.

7. Dispositif selon la revendication 5, dans lequel lesdits montants (12) sont au moins en partie encastrés dans les parties verticales d'extrémité des flancs longitudinaux du compartiment.

8. Dispositif selon la revendication 5, dans lequel lesdits longerons (13) sont au moins en partie encastrés dans le pavillon du compartiment.

9. Dispositif selon la revendication 5, dans lequel lesdits montants (12) sont munis de languettes (40) en avant desquels des rebords d'extrémité (42) des panneaux inférieur et intermédiaires du rideau de fermeture en position verticale s'étendent et se déplacent.

10. Dispositif selon l'une quelconque des revendications précédentes, comprenant des moyens d'entraînement (43) du rideau de fermeture, placés dans l'espace supérieur arrière situé au-dessus et en arrière des portions de liaison des rails de guidage.

11. Dispositif selon la revendication 10, dans lequel les moyens d'entraînement (43) comprennent un arbre transversal (44) portant des roues d'entraînement (46), des éléments souples allongés de transmission tels que des chaînes (49), dont les extrémités sont reliées aux panneaux d'extrémité (27a, 27b) du rideau de fermeture et en prise avec lesdites roues d'entraînement, un moteur d'entraînement (48) relié audit arbre transversal et un ressort de torsion (51) placé autour dudit arbre d'entraînement dont une extrémité est reliée à cet arbre et l'autre extrémité est fixe.

12. Dispositif selon la revendication 11, dans lequel les brins verticaux des éléments souples allongés (49) s'étendent à l'intérieur des montants (12) de la structure rigide (11).

13. Dispositif selon la revendication 11, dans lequel le moteur électrique et la liaison entre ce dernier et l'arbre de transmission sont réversibles de telle sorte que le rideau de fermeture peut être déplacé manuellement.

14. Dispositif selon l'une quelconque des revendications précédentes, dans lequel les panneaux successifs du rideau de fermeture sont articulés entre eux et portent des galets coopérant avec lesdits rails de guidage.

15. Dispositif selon l'une quelconque des revendications précédentes, dans lequel il est assemblé de façon à former une unité fonctionnelle.

16. Véhicule de transport de marchandises tel qu'un porteur, un semi-remorque ou une remorque, équipé d'un dispositif de fermeture selon l'une quelconque des revendications précédentes et comprenant un carénage (53) fixé au-dessus du pavillon et délimitant un espace de réception des parties du dispositif de fermeture situées au-dessus et/ou à l'extrémité du pavillon.

## Patentansprüche

1. Vorrichtung zum Verschließen eines Laderaums eines Konsumgüter-Transportfahrzeugs wie etwa eines Transporters, eines Lastkraftwagens, eines Aufliegers oder eines Anhängers, der durch einen Boden, longitudinale Seitenwände und ein Dach, das die oberen Teile der longitudinalen Seitenwände verbindet, begrenzt ist und einen Zugang aufweist, wobei diese Verschlussvorrichtung Folgendes umfasst:
einen Verschlussvorhang (26), der aufeinander folgende Platten (27) aufweist,
und Führungsschienen (19), die mit Führungsmitteln (29) zusammenwirken, die von den seitlichen Enden der Platten getragen werden und vertikale Abschnitte (20) und horizontale Abschnitte (21) aufweisen, die miteinander durch Verbindungsabschnitte (22) in Form von Bögen verbunden sind, derart, dass der Verschlussvorhang längs der Führungsschienen in der Weise verlagert werden kann, dass er eine abgesenkte Position für geschlossenen Zugang und eine angehobene Position für geöffneten Zugang einnehmen kann,
wobei die vertikalen Abschnitte (20) der Führungsschienen (19) benachbart zu den vertikalen Abschlussteilen der longitudinalen Seitenwände (6) des Laderaums (4) angeordnet sind und die horizontalen Abschnitte (21) der Führungsschienen sich über das Dach (8) des Laderaums (4) erstrecken, derart, dass sich der Verschlussvorhang in der angehobenen Position wenigstens teilweise über das Dach erstreckt;
**dadurch gekennzeichnet, dass** das Dach (8) verkürzt ist, derart, dass es eine Endkante (8a) aufweist, die sich auf Seiten des Laderaums (4) und entfernt von den vertikalen Abschlussteilen der longitudinalen Seitenwände befindet, und dass in der Verschlussposition die obere Abschlussplatte (27b) zu den anderen Platten geneigt ist und ihr oberer Rand sich in der Zone der Endkante (8a) des Dachs (8) befindet.

2. Vorrichtung nach Anspruch 1, wobei sich die vertikalen Abschnitte der Führungsschienen längs der vertikalen Endkanten (23) der longitudinalen Seitenwände (6) des Laderaums erstrecken.

3. Vorrichtung nach einem der vorhergehenden Ansprüche, die Überführungsmittel (31, 35) umfasst, um die obere Abschlussplatte (27b) des Verschlussvorhangs durch Kippen bis in die Verschlussposition nach unten in Bezug auf die horizontalen Abschnitte der Führungsschienen zu verlagern, wobei sich die Seitenkanten des Endes dieser Platte in dieser Position über festen Abstützrändern (14a) befinden, und um sie ab dem Beginn ihrer Verlagerung in die Öffnungsposition nach oben zu entfernen.

4. Vorrichtung nach Anspruch 3, wobei die obere Abschlussplatte (27b) des Verschlussvorhangs durch Läufer (31) getragen wird, die mit den Führungsschienen (19) über Schwenkarme (35) zusammenwirken, die einerseits an den Läufern und andererseits an der oberen Abschlussplatte angelenkt sind, wobei diese Schwenkarme (35) mit Zapfen (38) versehen sind, die mit Überführungsnocken (39) zusammenwirken.

5. Vorrichtung nach einem der vorhergehenden Ansprüche, die eine starre Struktur (11) aufweist, die Stützen (12), die vertikale Abschnitte der Führungsschienen umfassen, Längsträger (13), die die horizontalen Abschnitte der Führungsschienen umfassen, und Winkelplatten, die die Stützen und die Längsträger verbinden und längs derer sich die Verbindungsabschnitte der Führungsschienen erstrecken, enthält.

6. Vorrichtung nach Anspruch 5, wobei die starre Struktur seitliche Winkelplatten (14) umfasst, die mit einem Abstützrand (14a) für die obere Abschlussplatte (27a) des Verschlussvorhangs in der geneigten geschlossenen Position versehen sind.

7. Vorrichtung nach Anspruch 5, wobei die Stützen (12) wenigstens teilweise in vertikale Abschlussteile der longitudinalen Seitenwände des Laderaums eingelassen sind.

8. Vorrichtung nach Anspruch 5, wobei die Längsträger (13) wenigstens teilweise in das Dach des Laderaums eingelassen sind.

9. Vorrichtung nach Anspruch 5, wobei die Stützen (12) mit Laschen (40) versehen sind, vor denen sich Abschlussränder (42) der unteren und der Zwischenplatten des Verschlussvorhangs in der vertikalen Position erstrecken und verlagern.

10. Vorrichtung nach einem der vorhergehenden Ansprüche, die Antriebsmittel (43) für den Verschlussvorhang umfasst, die in dem hinteren oberen Raum angeordnet sind, der sich über und hinter den Verbindungsabschnitten der Führungsschienen befindet.

11. Vorrichtung nach Anspruch 10, wobei die Antriebsmittel (43) eine transversale Welle (44), die Antriebsräder (46) trägt, lang gestreckte nachgiebige Übertragungselemente wie etwa Ketten (49), deren Enden mit den Abschlussplatten (27a, 27b) des Verschlussvorhangs verbunden sind und mit den Antriebsrädern in Eingriff sind, einen Antriebsmotor (48), der mit der transversalen Welle verbunden ist, und eine Torsionsfeder (51), die um die Antriebswelle angeordnet ist und wovon ein Ende mit dieser Welle verbunden ist und das andere Ende fest ist, umfassen.

12. Vorrichtung nach Anspruch 11, wobei sich die vertikalen Teilabschnitte der lang gestreckten nachgiebigen Elemente (49) in den Stützen (12) der starren Struktur (11) erstrecken.

13. Vorrichtung nach Anspruch 11, wobei der Elektromotor und die Verbindung zwischen diesem Letztern und der Übertragungswelle umkehrbar sind, derart, dass der Verschlussvorhang manuell verlagert werden kann.

14. Vorrichtung nach einem der vorhergehenden Ansprüche, wobei die aufeinander folgenden Platten des Verschlussvorhangs aneinander angelenkt sind und Rollen tragen, die mit den Führungsschienen zusammenwirken.

15. Vorrichtung nach einem der vorhergehenden Ansprüche, wobei sie in der Weise zusammengefügt ist, dass sie eine funktionale Einheit bildet.

16. Konsumgüter-Transportfahrzeug wie etwa ein Transporter, ein Auflieger oder ein Anhänger, das mit einer Verschlussvorrichtung nach einem der vorhergehenden Ansprüche ausgerüstet ist und eine feste Verkleidung (53) über dem Dach aufweist, die einen Raum für die Aufnahme von Teilen der Verschlussvorrichtung, die sich über dem Dach und/oder an dessen Ende befinden, begrenzt.

## Claims

1. Closure device for a compartment of a vehicle for transporting goods such as a carrier vehicle, a lorry, a semitrailer or a trailer, delimited by a floor, longitudinal side walls and a roof connecting the upper parts of the longitudinal side walls and having an access, this closure device comprising:
a closure curtain (26) comprising successive panels (27),
and guide rails (19) cooperating with guide means (29) borne by the lateral ends of the panels and having vertical portions (20) and horizontal portions (21) interconnected by connection portions (22) in the form of arcs, such that the closure curtain can be moved along the said guide rails so as to occupy a lowered position for closing the access and a raised position for opening the access,
the vertical portions (20) of the guide rails (19) being placed adjacently to the vertical end parts of the longitudinal side walls (6) of the compartment (4) and the horizontal portions (21) of the guide rails extending above the roof (8) of the compartment (4), such that, in the raised position, the closure curtain extends at least in part above the roof;
**characterized in that** the roof (8) is shortened so as to have an end edge (8a) situated on the compartment (4) side and at a distance from the vertical end parts of the said longitudinal side walls, and **in that**, in the closure position, the upper end panel (27b) is inclined towards the other panels and its upper edge is situated in the region of the said end edge (8a) of the roof (8).

2. Device according to Claim 1, in which the vertical portions of the guide rails extend along the vertical end edges (23) of the longitudinal side walls (6) of the compartment.

3. Device according to either one of the preceding claims, comprising transfer means (31, 35) for moving the upper end panel (27b) of the closure curtain by tilting it downwardly with respect to the horizontal portions of the guide rails until it reaches the closure position, in which the lateral end edges of this panel are above fixed bearing rims (14a), and moving it upwardly away therefrom during the start of its movement towards the opening position.

4. Device according to Claim 3, in which the upper end panel (27b) of the closure curtain is borne by carriages (31) cooperating with the said guide rails (19), via tilting arms (35) articulated, on the one hand, on the carriages and, on the other hand, on the upper end panel, these tilting arms (35) being provided with fingers (38) cooperating with transfer cams (39).

5. Device according to any one of the preceding claims, comprising a rigid structure (11) comprising uprights (12) including the vertical portions of the guide rails, longitudinal members (13) including the horizontal portions of the guide rails and angle plates connecting the uprights and the longitudinal members and along which extend the connection portions of the guide rails.

6. Device according to Claim 5, in which the rigid structure comprises lateral angle plates (14) provided with a bearing rim (14a) for the upper end panel (27a) of the closure curtain in the inclined closed position.

7. Device according to Claim 5, in which the said uprights (12) are at least in part embedded in the vertical end parts of the longitudinal side walls of the compartment.

8. Device according to Claim 5, in which the said longitudinal members (13) are at least in part embedded in the roof of the compartment.

9. Device according to Claim 5, in which the said uprights (12) are provided with tongues (40) in front of which end rims (42) of the lower and intermediate panels of the closure curtain in the vertical position extend and move.

10. Device according to any one of the preceding claims, comprising means (43) for driving the closure curtain, which are placed in the rear upper space situated above and to the rear of the connection portions of the guide rails.

11. Device according to Claim 10, in which the drive means (43) comprise a transverse shaft (44) bearing drive wheels (46), elongate flexible transmission elements such as chains (49), of which the ends are connected to the end panels (27a, 27b) of the closure curtain and engage with the said drive wheels, a drive motor (48) connected to the said transverse shaft and a torsion spring (51) placed around the said drive shaft and of which one end is connected to this shaft and the other end is fixed.

12. Device according to Claim 11, in which the vertical strands of the elongate flexible elements (49) extend inside the uprights (12) of the rigid structure (11).

13. Device according to Claim 11, in which the electric motor and the connection between the latter and the transmission shaft are reversible such that the closure curtain can be moved manually.

14. Device according to any one of the preceding claims, in which the successive panels of the closure curtain are articulated to one another and bear rollers cooperating with the said guide rails.

15. Device according to any one of the preceding claims, in which it is assembled so as to form a functional unit.

16. Vehicle for transporting goods such as a carrier vehicle, a semitrailer or a trailer, equipped with a closure device according to any one of the preceding claims and comprising a fairing (53) fixed above the roof and delimiting a space for receiving the parts of the closure device which are situated above and/or at the end of the roof.
